# FASCICULE DE BREVET EUROPEEN

(11) **EP 2 005 226 B1**
(45) Date de publication et mention de la délivrance du brevet: **02.05.2012**
(21) Numéro de dépôt: 07731889.7
(22) Date de dépôt: 06.04.2007
(51) Int. Cl.: G02B 6/00, F21V 8/00

(54) **PANNEAU LUMINEUX**
LEUCHTSCHIRM
LUMINOUS PANEL

(30) Priorité: 13.04.2006 FR 0651348
(43) Date de publication de la demande: 24.12.2008
(73) Titulaire: SAINT-GOBAIN GLASS FRANCE, 92400 Courbevoie (FR)
(72) Inventeur: TCHAKAROV, Svetoslav, F-94110 Arcueil (FR)
(74) Mandataire: Cardin, Elise
(86) Numéro de dépôt international: PCT/FR2007/051087
(87) Numéro de publication internationale: WO 2007/119019

(56) Documents cités:
- EP-A- 1 533 632
- GB-A- 2 168 519
- US-A1- 2003 098 840
- US-A1- 2005 007 751
- US-B1- 6 358 632
- US-B1- 6 473 554
- US-B1- 6 645 645

## Description

L'invention a trait au domaine de l'éclairage et plus particulièrement porte sur un panneau lumineux.

Un panneau lumineux déjà connu de EP1533632 comporte un substrat plan transparent, verre ou plastique, doté sur l'une de ses faces principales d'un dispositif électroluminescent de type OLED (Organic Light Emitting Diodes en anglais). Ce panneau émet une lumière uniforme via la face opposée à la face porteuse du dispositif OLED.

L'invention se propose d'élargir la gamme de panneaux lumineux disponibles, en améliorant les performances optiques et/ou en intégrant de nouvelles fonctionnalités optiques.

A cet effet, l'invention a pour objet un panneau lumineux comme défini dans la revendication1 et comportant:
- un substrat plan transparent ayant une tranche, deux faces principales et une épaisseur donnée,
- au moins une zone de lumière directe au moyen d'une source de lumière associée à l'une des faces principales,
- une source de rayonnement visible et/ou ultraviolet, ledit rayonnement étant guidé par réflexions totales dans l'épaisseur du substrat,
- au moins une zone d'extraction du rayonnement guidé, ladite zone d'extraction étant associée à l'une des faces principales pour former une autre zone lumineuse distincte de la zone de lumière directe.
et du côté de la face principale associée à la zone d'extraction, la zone de lumière directe présente une luminance inférieure à la luminance de l'autre zone lumineuse.

Le panneau lumineux selon l'invention prévoit donc des zones lumineuses géographiquement (essentiellement) distinctes (des zones de recouvrement restreintes étant toutefois possible) et d'origine distincte ou essentiellement distincte. La source de lumière produit du ou des rayonnements dans le visible.

Dans la zone de lumière (essentiellement) directe, la lumière est (essentiellement) issue de cette source de lumière, sort directement par réfraction de la face associée et/ou traverse le substrat et sort par l'autre face, également par réfraction.

Dans l'autre zone lumineuse distincte, la lumière provient (essentiellement) d'un ou de rayonnements guidés extraits dans le visible et/ou ultraviolet (dit UV). Naturellement, le substrat sert notamment de guide de lumière et/ou d'UV.

Pour former l'autre zone lumineuse, la zone d'extraction, en totalité ou à tout le moins la majeure partie de la zone d'extraction, n'est naturellement pas en regard de la source de lumière. La zone d'extraction peut être sensiblement du même côté du substrat que la source de lumière, par exemple sur un même plan que la source de lumière, notamment adjacente, contiguë à la source de lumière. La zone d'extraction peut aussi être de l'autre côté du substrat.

Le panneau peut comprendre plusieurs zones d'extraction pour former plusieurs zones lumineuses. La ou les zones d'extraction peuvent être continues ou discontinues.

Les zones lumineuses d'origine (essentiellement) distincte et géographiquement (essentiellement) distincte permettent d'ajuster les caractéristiques optiques du panneau lumineux en fonction des besoins. Cela permet en outre d'obtenir des zones lumineuses de différentes couleurs et/ou de différentes géométries et/ou ayant des fonctions optiques différentes. Ces deux types de zones peuvent être lumineuses simultanément ou non, être pilotées indépendamment ou non.

La ou les zones d'extraction peuvent servir par exemple pour renforcer l'éclairage fourni par la zone de lumière directe, notamment pour un éclairage de type architectural, ou encore pour signaler le panneau lumineux.

Le panneau lumineux selon l'invention peut être utilisé aussi bien en extérieur qu'en intérieur et le substrat transparent peut être de toute taille, par exemple de l'ordre du m².

La lumière directe peut être uniforme. On choisira une source surfacique.

En outre, le panneau lumineux selon l'invention utilise aussi un rayonnement guidé pour créer de la lumière.

Le panneau lumineux selon l'invention peut avoir par exemple une luminance moyenne globale égale à la luminance du panneau lumineux uniforme déjà connu tout en ayant, dans la zone de lumière directe, une luminance inférieure à celle du panneau déjà connu. De cette manière, on réduit la consommation électrique du fait de l'apport de la lumière par extraction : l'efficacité lumineuse est ainsi augmentée.

Le panneau lumineux selon l'invention peut aussi avoir une luminance globale supérieure à la luminance du panneau déjà connu, ceci sans surconsommation électrique.

Le panneau lumineux selon l'invention fournit un éclairage qui n'est pas uniforme c'est-à-dire qui n'est pas réparti uniformément sur l'une des faces principales ou sur les deux faces principales. Le panneau lumineux selon l'invention est à éclairage différencié tout particulièrement en fonction du type de zones lumineuses, par exemple produisant à la fois un éclairage architectural et décoratif, ou un éclairage architectural et de signalisation, ou un éclairage architectural et un affichage - par exemple du type dessin, logo, signalisation alphanumérique - notamment pour les enseignes, les issues de secours.

L'une ou les faces principales peuvent être entièrement éclairantes sans être toutefois uniformes. Par exemple sur la face associée à la source de lumière, la zone de lumière directe peut être contiguë avec la zone d'extraction. En bordure d'une zone de lumière directe et d'une zone de lumière par extraction, la lumière peut être à la fois issue directement de la source de lumière et être issue du rayonnement guidé extrait, par exemple rétrodiffusée dans le substrat.

L'une ou les faces principales peuvent en outre comprendre une ou des zones non lumineuses (sombres) continues ou discontinues.

Les deux faces principales peuvent avoir chacune une zone de lumière directe, leurs luminances L1 et L2 peuvent être sensiblement identiques ou volontairement distinctes, par exemple avec un écart supérieur à 10%, voire 30%. On peut préférer en particulier augmenter la quantité de lumière dirigée vers le substrat pour favoriser le guidage et ainsi augmenter la luminance de la ou les zones d'extraction.

Par exemple on choisit L1 (du coté opposé à la source de la lumière) au moins deux fois supérieure à L2, voire trois fois supérieure à L2 (du côté de la source de lumière).

Typiquement, pour un confort visuel, L1 peut être inférieure ou égale à 1200 cd/m², par exemple 1000 cd/m² et L2 peut être inférieure ou égale à 500 cd/m², par exemple 300 cd/m².

Dans un mode de réalisation préféré, la zone de lumière directe occupe une surface égale à au moins 50 % de la surface du substrat, encore plus préférentiellement 80%, et notamment centrale.

La zone de lumière directe peut être continue. La zone de lumière directe peut aussi être discontinue par exemple sous forme d'un ensemble de zones lumineuses surfaciques de géométrie donnée (rectangle et/ou carré et/ou rond ...) éventuellement régulièrement espacées et de surface totale égale à au moins 50 %, voire 80 % de la surface du substrat.

En outre, alternativement ou cumulativement, la ou les zones d'extraction peuvent occuper une surface (totale) inférieure ou égale à 30 % de la surface du substrat encore plus préférentiellement inférieure ou égale à 10 %.

La ou les zones d'extraction sont de préférence sous forme de bande(s) de lumière, notamment uniforme(s), et préférentiellement disposée(s) en périphérie d'une des faces. Ces bandes peuvent par exemple former un cadre très lumineux.

Plus la surface de la zone d'extraction est faible, plus la luminance L3 peut être élevée. La luminance L3 peut être aisément supérieure ou égale à 1500 cd/m², par exemple de l'ordre de 3000 cd/m².

Dans un mode de réalisation de l'invention, dans la zone de lumière directe, lorsque la source de lumière est éteinte, le panneau est transparent ou globalement transparent, notamment de transmission lumineuse T_{L} éventuellement globale supérieure à 20 %, de préférence supérieure ou égale à 50 %, encore plus préférentiellement supérieure ou égale à 70 %, et de réflexion lumineuse R_{L} inférieure ou égale à 50 %, de préférence inférieure ou égale à 30 %.

Le panneau est dit globalement transparent dans la zone de lumière directe s'il comprend un matériau qui est susceptible d'absorber ou de réfléchir une fraction substantielle de la lumière visible (par exemple faisant partie de la source de lumière), ce matériau étant toutefois réparti dans cette zone de façon à ce que la lumière visible soit suffisamment transmise. Par exemple, ce matériau forme un maillage.

En fixant une transmission lumineuse T_{L} (globale) élevée, lorsque la source de lumière n'est pas allumée, on peut ainsi réaliser par exemple une fenêtre éclairante. L'amélioration de l'éclairage de la pièce n'est donc réalisée au détriment de la transmission lumineuse. En limitant en outre la réflexion lumineuse notamment du côté extérieur de la fenêtre éclairante, cela permet aussi de contrôler le niveau de réflexion par exemple pour respecter les normes anti-éblouissement en vigueur pour les façades de bâtiments.

Et, dans ce mode notamment, la source de lumière est surfacique, constitué d'un dispositif à couche électroluminescente organique. Cette source surfacique allumée peut en outre être apte à préserver l'intimité à tout le moins la nuit ou dans un environnement relativement sombre.

La source de lumière peut être monochromatique, notamment bleu et/ou verte et/ou rouge, ou être adaptée pour produire une lumière blanche.

Il existe différents types de sources de lumière :
- une pluralité de diodes électroluminescentes,
- une couche photoluminescente excitable dans l'UV en particulier le proche UV (environ 360 à 400 nm) ou dans le visible, de préférence associée à un dispositif électroluminescent (diodes DEL, dispositif à couche électroluminescente...) producteur du rayonnement (primaire) excitateur, la couche photoluminescente étant de préférence sensiblement transparente,
- un dispositif à couche électroluminescente organique ou inorganique, notamment de type OLED, PLED, un TFEL ou un dispositif TDEL.

Chacune de ces sources est présentée plus en avant ci-après.

La source de lumière de type diode peut être encapsulée c'est-à-dire comprendre une puce semi-conductrice et une enveloppe, par exemple en résine type époxy ou PMMA, encapsulant la puce. Les fonctions de cette enveloppe peuvent être multiples : protection de l'oxydation et de l'humidité, élément diffusant ou de collimation, conversion de longueur d'onde ...

La diode peut être par exemple une puce semi-conductrice sans lentille de collimation par exemple de taille de l'ordre de la centaine de µm ou du mm ; et éventuellement avec une encapsulation minime par exemple de protection.

Ainsi, la diode peut être choisie notamment parmi au moins l'une des diodes électroluminescentes suivantes :
- une diode dont la direction principale d'émission est perpendiculaire ou de préférence oblique par rapport à la face principale associée, pour favoriser le guidage,
- une diode présentant deux directions principales d'émission obliques par rapport la surface émettrice de la diode, et à la face principale associée, donnant une forme d'aile de chauve souris (« batwing » en anglais), les deux directions étant par exemple centrées sur des angles entre 20 et 40° et entre -20 et -40° avec des demi angles au sommet de l'ordre de 10° à 20°,
- une diode présentant une ou deux directions principales d'émission obliques par rapport la surface émettrice de la diode, les deux directions étant centrées sur des angles par exemple entre 60 et 85° et entre -60 et -85° avec des demi angles au sommet de l'ordre de 10° à 30°.

Typiquement, une diode collimatée peut présenter un demi angle au sommet pouvant descendre jusqu'à 2 ou 3°.

La diode peut être de « haute puissance » c'est-à-dire supérieure à 0,2 W ou de luminosité supérieure à 5 lumens.

Toutefois, on peut préférer éviter des points lumineux trop intenses, et choisir par exemple une diode de type « batwing ».

La source de lumière qui est une couche photoluminescente est typiquement une couche à base de particules luminophores dans une matrice. La matrice peut être par exemple inorganique et peut comprendre par exemple un produit de polymérisation/polycondensation d'alkoxyde de silicium tel que tétraéthoxysilane (TEOS), tétraméthoxysilane (TMOS), méthyltriéthoxysilane (MTEOS) et similaires. Ces précurseurs de la matrice offrent d'excellentes conditions de compatibilité avec de nombreuses particules luminophores.

Les particules luminophores peuvent avantageusement être sélectionnées pour déterminer la couleur de la zone de lumière directe dans une large palette de couleurs.

Ainsi, on peut choisir des particules luminophores émettant différentes longueurs d'ondes sont associées, individualisées et homogénéisées, de manière à produire une lumière jaune, blanche.

Des particules luminophores identiques ou émettant différentes longueurs d'ondes peuvent aussi être associées selon des compositions et/ou concentrations variables, de manière à former des signes tels qu'écrits ou similaires, ou dans tout autre but notamment décoratif.

De préférence, afin de préserver une transmission lumineuse satisfaisante, lorsque la couche photoluminescente est relativement opaque, on limite son étendue (sa largeur), par exemple la couche est discontinue sous forme de zones avec une largeur de quelques dizaines de mm. On conserve néanmoins une efficacité lumineuse.

Comme particules luminophores excitables notamment dans le proche UV, on peut citer du CaS:Eu, Tm²⁺ émettant dans le rouge, du SrAl₂O₄:Eu²⁺ émettant dans le vert, ou du Y₃Al₅O₁₂:Ce émettant dans le jaune.

Avantageusement, les particules luminophores peuvent avoir des dimensions qui sont au plus égales à 100 nm, de préférence à 30 nm, encore plus préférentiellement à 10 nm, et l'ensemble qu'elles forment avec la matrice est transparent. Ces particules luminophores peuvent être en suspension organique notamment aqueuse, alcoolique.

On peut citer par exemple des particules dites « core-shell », par exemple à base de ZnS pour la coquille (shell en anglais) et de CdSe pour le coeur (core en anglais).

Naturellement le panneau peut aussi comprendre une couche photoluminescente pour convertir la longueur d'onde de la source de lumière directe. Par exemple on peut citer du ZnS:Cu émettant dans le jaune-vert ou Y₃Al₅O₁₂:Ce émettant dans le jaune à partir de bleu.

La source de lumière peut être un dispositif électroluminescent avec deux électrodes, de préférence sous forme de couches électroconductrices.

L'électrode la plus éloignée du substrat peut toutefois être une feuille ou une plaque métallique et peut en outre former un miroir (notamment en cuivre, en inox, en aluminium).

Dans la configuration où la source de lumière produit la lumière guidée, la couche électroconductrice la plus proche du substrat, généralement l'électrode inférieure, est choisie transparente, notamment avec une transmission lumineuse T_{L} supérieure ou égale à 50 %, notamment supérieure ou égale à 70 % , voire supérieure ou égale à 80 %.

Cette couche électroconductrice peut être choisie par les oxydes métalliques notamment les matériaux suivants : oxyde d'étain dopé, notamment en fluor SnO₂:F ou à l'antimoine SnO₂:Sb (les précurseurs utilisables en cas de dépôt par CVD peuvent être des organo-métalliques ou halogénures d'étain associés avec un précurseur de fluor du type acide fluorhydrique ou acide trifluoracétique), l'oxyde de zinc dopé, notamment à l'aluminium ZnO:Al (les précurseurs utilisables, en cas de dépôt par CVD, peuvent être des organo-métalliques ou halogénures de zinc et d'aluminium) ou au gallium ZnO:Ga, ou encore l'oxyde d'indium dopé, notamment à l'étain l'ITO (les précurseurs utilisables en cas de dépôt par CVD peuvent être des organo-métalliques ou halogénures d'étain et d'indium), ou l'oxyde d'indium dopé au zinc (IZO).

On peut utiliser plus généralement tout type de couches électroconductrices transparentes, par exemple des couches dites « TCO » (pour Transparent Conductive Oxyde en anglais), par exemple d'épaisseur entre 2 et 100 nm. On peut aussi utiliser des couches minces métalliques dites « TCC » (pour Transparent conductive coating en anglais) par exemple en Ag, Al, Pd, Cu, Au et typiquement d'épaisseur entre 2 et 50 nm.

Naturellement, pour les applications où la transparence est nécessaire dans la zone de lumière directe, les deux électrodes sont transparentes.

La couche électroconductrice la plus éloignée du substrat peut être opaque, réfléchissante, métallique notamment comprenant une couche en Al, Ag, Cu, Pt, Cr, obtenue par pulvérisation ou évaporation.

Par ailleurs, le dispositif peut être préférentiellement muni d'au moins une couche-barrière, notamment vis-à-vis des alcalins, insérée entre ledit substrat choisi verrier et l'électrode la plus proche du substrat.

Cette couche possédant des propriétés de barrière aux alcalins peut être à base de matériau diélectrique, choisi parmi au moins l'un des composés suivants : nitrure ou oxynitrure de silicium, nitrure ou oxynitrure d'aluminium, oxyde ou oxycarbure de silicium, selon une épaisseur comprise entre 20 et 150 nm.

La couche barrière peut comporter une alternance de couches à haut indice de réfraction, compris entre 1,9 et 2,3, et de couches à bas indice de réfraction, compris entre 1,4 et 1,7, notamment selon les séquences Si₃N₄/SiO₂ ou Si₃N₄/SiO₂/Si₃N₄.

La source de lumière selon l'invention est un dispositif électroluminescent avec une couche électroluminescente organique.

Avec une couche électroluminescente organique on parle d'OLED. Les OLED sont généralement dissociés en deux grandes familles suivant le matériau organique utilisé. Si les couches électroluminescentes organiques sont des polymères on parle de PLED (Polymer Light Emitting Diodes en anglais). Si les couches électroluminescentes sont des petites molécules on parle de SM-OLED (Small Mollecule Organic Light Emitting Diodes en anglais).

Un exemple de PLED consiste en un empilement suivant : une couche de poly(2,4-ethilene dioxythiophene) dopé au poly(styren sulphonate) (PEDOT :PSS) de 50 nm, une couche de phenyl poly (p-phenylenevynilene) Ph-PPV de 50 nm. L'électrode supérieure peut être une couche de Ca.

D'une manière générale la structure d'une SM-OLED consiste en un empilement de couches d'injection de trous, couche de transport de trous, couche émissive, couche de transport d'électron.

Un exemple de couche d'injection de trous est le phthalocyanine de cuivre (CuPC), la couche de transport de trous peut être par exemple le N,N'-Bis(naphthalen-1-yl)-N,N'-bis(phenyl)benzidine (alpha-NPB). La couche émissive peut être par exemple une couche de 4,4',4"-tri(N-carbazolyl) triphenylamine (TCTA) dopé au fac tris(2-phenylpyridine) iridium [Ir(ppy)₃]. La couche de transport d'électron peut être composée de tris-(8-hydroxyquinoline) aluminum (Alq₃) ou le bathophenanthroline (BPhen). L'électrode supérieure peut être une couche de Mg/Al ou LiF/Al.

Des exemples d'empilements électroluminescents organiques sont par exemple décrits dans le document US6645645.

Dans l'invention, ladite source de lumière constitue la source dudit rayonnement guidé choisi visible.

Dans ce cas, on récupère ainsi en grande partie la lumière injectée dans le substrat à des angles supérieurs ou égaux à l'angle de réflexion totale pour former la zone de lumière distincte.

Cette source de lumière peut avoir par exemple un diagramme d'émission de type lambertien.

Un panneau lumineux selon l'invention a une seule source électrique de rayonnement UV et/ou visible et, plus précisément, ladite source de lumière qui est associée à l'une des faces principales est unique et electrique.

Cette source de lumière visible est constituée d'un dispositif électroluminescent, tel que ceux déjà décrits précédemment (de type OLED).

De cette façon, le panneau lumineux est à la fois de conception simple, performant et est en outre peu onéreux.

La source de lumière peut être directement sur l'une des faces principales, notamment dans un évidemment prévu à cet effet, ou sur un élément rapporté. De même, la ou les zones d'extraction peuvent être directement l'une des faces principales ou sur un élément rapporté adéquat.

Dans un mode de réalisation avantageux, la source de lumière est directement sur l'une des faces principales pour optimiser l'injection de lumière dans le substrat.

Par exemple, avec un dispositif électroluminescent comme source de lumière, l'une des couches électroconductrices est directement déposée sur le substrat (ou la sous couche barrière). Des diodes LED peuvent être agencées sur la face par exemple dans un trou. Une couche photoluminescente peut être directement déposée sur la face principale.

De préférence, pour faciliter la fabrication du panneau la zone d'extraction peut être associée à la face principale opposée à la face avec la source de lumière.

La source de lumière peut être collée ou de préférence feuilletée avec un autre substrat plan, de préférence transparent tel qu'un verre, à l'aide d'un intercalaire de feuilletage, notamment extraclair.

On peut choisir de former un verre feuilleté. L'intercalaire de feuilletage peut être un film plastique transparent tel que du polyvinyl butyral (PVB) ou de l'éthylène-vinyl acétate (EVA). On peut aussi utiliser une résine adhésive transparente.

Le substrat peut alternativement former une feuille de verre d'un vitrage multiple (composite ou verrier), notamment un double vitrage. La source de lumière peut être disposée de préférence à l'intérieur du double vitrage, avec une lame de gaz notamment inerte (argon par exemple).

L'extraction est obtenue par l'un au moins des moyens suivants disposés dans ladite zone extraction :
- une couche diffusante, de préférence à base de particules minérales et de préférence avec un liant minéral,
- le substrat rendu diffusant, notamment texturé ou rugueux,
- un élément diffusant, notamment texturé ou rugueux, rapporté sur le substrat, de préférence sensiblement de même indice de réfraction.

Lorsque le rayonnement guidé est visible, la couche diffusante peut être à base de particules diffusant le visible et éventuellement de particules luminophores excitées dans le visible, pour changer de couleur.

Les particules diffusantes dans le visible peuvent être de dimensions notamment comprises entre 100 nm et 1 µm, notamment entre 300 et 700 nm, telles que d'alumine, ou des particules luminophores elles-mêmes ; ces particules diffusant la lumière visible sont diélectriques, semiconductrices ou conductrices.

Des particules luminophores de dimensions comprises entre 30 et 500 nm, notamment de dimensions au moins égales à 400 nm sont en outre susceptibles de diffuser la lumière visible, pouvant rendre inutile l'ajout d'autres particules diffusantes.

Le substrat rendu diffusant qui est texturé peut être typiquement formé de motifs géométriques réguliers, de dimensions entre quelques µm et quelques mm, par exemple des prismes, ou encore des microlentilles de dimensions entre 5 à 10 µm.

Un susbtrat rendu diffusant qui est rugueux peut avoir typiquement une rugosité entre quelques µm et quelques mm.

Le substrat transparent peut être parallélépipédique, avec des faces principales rectangulaires, carrées ou même de toute autre forme (ronde, ovale, polygonale...). Ce substrat peut être de grande taille par exemple de surface supérieure à 0,5 ou 1 m².

Le susbtrat transparent peut être en toute matière plastique transparente, telle que polycarbonate, polyvinylbutyral, polyoléfine notamment polyéthylène, polypropylène, poly(téréphtalate d'éthylène), polyuréthane, polymère acrylique tel que poly(méthacrylate de méthyle), résine ionomère, divers copolymères.

Dans un mode de réalisation avantageux, le substrat transparent est verrier et de préférence avec au moins une zone microtexturée, sablée, ou dépolie à l'acide pour former la zone d'extraction diffusante.

Par ailleurs, au moins l'un des bords de la tranche, et de préférence tous les bords; forme avec la face principale associée à la source de lumière un angle externe supérieur ou égal à 45° et inférieur à 90°, de préférence supérieur ou égal à 80°, pour rediriger les rayonnements sur une plus large zone d'extraction.

La tranche peut être ainsi biseautée.

Au moins l'un des bords de la tranche, et de préférence tous les bords de la tranche, peut être réfléchissant, et comporter de préférence un miroir, pour assurer un recyclage optimal du rayonnement guidé.

La zone en regard d'une zone extraction, située sur la face opposée, peut aussi être réfléchissante pour masquer cette zone d'extraction et/ou pour rediriger de la lumière rétrodiffusée.

Pour limiter les pertes du rayonnement guidé, le substrat transparent peut être un verre présentant un coefficient d'absorption inférieur à 2,5 m⁻¹, de préférence inférieur à 0,7 m⁻¹ à la longueur d'onde du rayonnement guidé.

On choisit par exemple des verres silicosodocalciques avec moins de 0,05% de Fe III ou de Fe₂O₃, notamment le verre Diamant de Saint-Gobain Glass, le verre Optiwhite de Pilkington, le verre B270 de Schott. On peut choisir toutes les compositions de verre extraclair décrites dans le document WO04/025334.

Dans une conception avantageuse de l'invention, l'épaisseur dudit substrat transparent peut être d'au moins 1 mm, de préférence d'au moins 5 mm, pour diminuer le nombre de réflexions internes et extraire ainsi plus de rayonnement guidé, favorisant ainsi la zone lumineuse distincte.

En outre, il peut être avantageux d'incorporer dans le panneau lumineux selon l'invention un revêtement ayant une fonctionnalité donnée. Il peut s'agir d'un revêtement à fonction de blocage des rayonnements de longueur d'onde dans l'infrarouge (utilisant par exemple une ou plusieurs couches d'argent entourées de couches en diélectrique, ou des couches en nitrures comme TiN ou ZrN ou en oxydes métalliques ou en acier ou en alliage Ni-Cr), à fonction basse émissivité (par exemple en oxyde de métal dopé comme SnO₂:F ou oxyde d'indium dopé à l'étain (ITO) ou une ou plusieurs couches d'argent), anti-buée (à l'aide d'une couche hydrophile), anti-salissures (revêtement photocatalytique comprenant du TiO₂ au moins partiellement cristallisé sous forme anatase), ou encore un empilement anti-reflet du type par exemple Si₃N₄/SiO₂/Si₃N₄/SiO₂.

Avec une source de lumière surfacique dotée de couches électroconductrices, l'une des couches électroconductrices peut être à fonction basse-émissivité et/ou pour un contrôle solaire.

Le panneau lumineux selon l'invention peut former au choix (choix alternatif ou cumulatif) un système lumineux, décoratif, architectural, un panneau d'affichage - par exemple du type dessin, logo, signalisation notamment alphanumérique - un élément de signalisation par exemple un panneau d'issue de secours.

De manière générale, le panneau lumineux selon l'invention peut équiper toute fenêtre de bâtiment ou de moyen de locomotion (fenêtre de train, hublot de cabine de bateau ou d'avion, de toit, de vitre latérale de véhicule industriel, voire de portion de lunette arrière ou de pare-brise).

On peut aussi penser à équiper du panneau lumineux selon l'invention, un vitrage, une porte vitrée, notamment coulissante, une cloison interne entre deux pièces dans un bâtiment, notamment dans un bureau, ou entre deux zones/compartiments d'un moyen de locomotion terrestre, aérien ou maritime, ou pour équiper une vitrine ou tout type de contenant.

Le panneau lumineux selon l'invention peut aussi être destiné au mobilier urbain et/ou à l'ameublement intérieur.

Le panneau lumineux peut en particulier être une dalle éclairante, un plafonnier, un panneau d'abribus, une paroi d'un présentoir, d'un étalage de bijouterie ou d'une vitrine, être un élément d'étagère ou de meuble, une façade d'un meuble, une tablette éclairante de réfrigérateur, être une paroi d'aquarium, d'une serre. Le panneau lumineux peut servir à l'éclairage d'une paroi de salle de bains ou d'un plan de travail de cuisine.

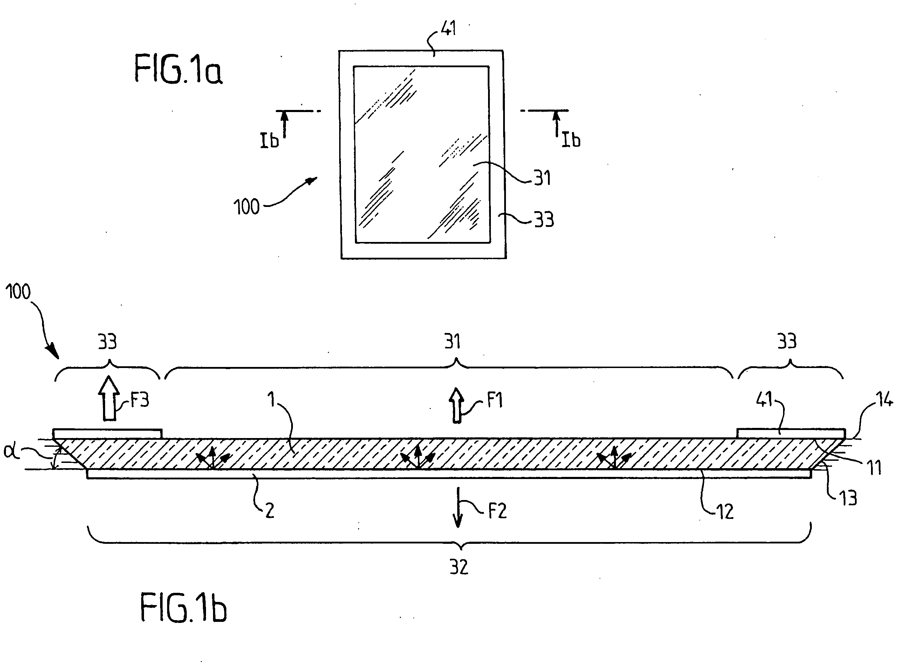

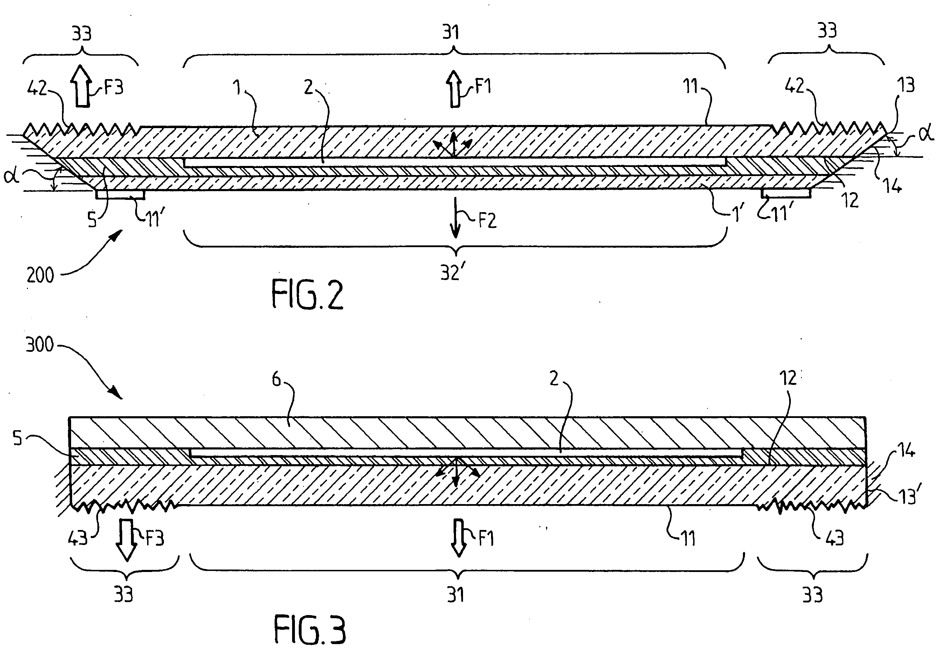

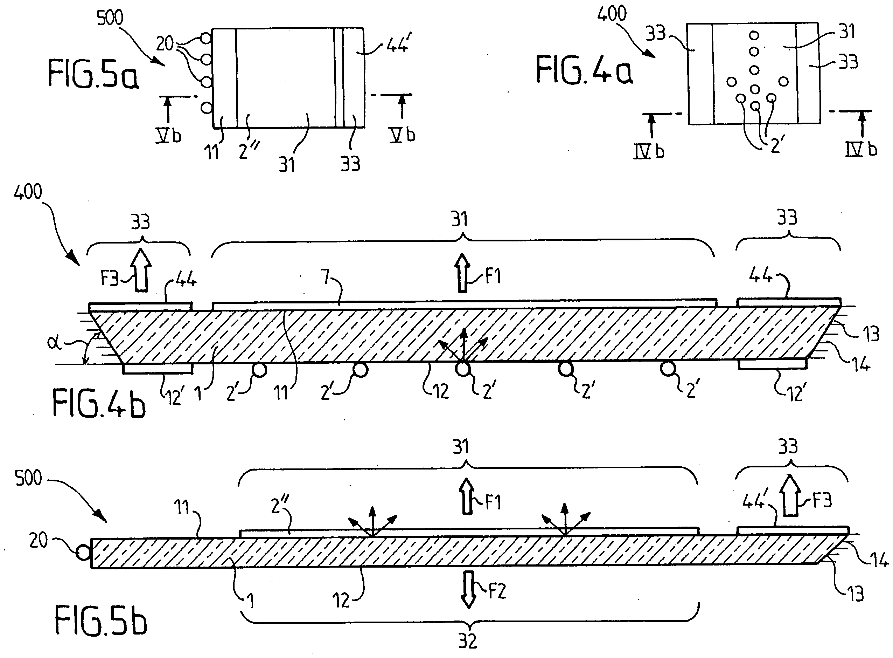

La présente invention sera mieux comprise à la lecture de la description détaillée ci-après d'exemples de réalisation non limitatifs et des figures suivantes.
■ Les figures 1a et 1b représentent respectivement des vues schématiques de face et en coupe latérale d'un panneau lumineux dans un premier mode de réalisation de l'invention ;
■ La figure 2 représente une vue schématique en coupe longitudinale d'un panneau lumineux dans un deuxième mode de réalisation de l'invention ;
■ La figure 3 représente une vue schématique en coupe longitudinale d'un panneau lumineux dans un troisième mode de réalisation non couvert par les revendications ;
■ Les figures 4a et 4b représentent respectivement des vues schématiques de face et en coupe longitudinale d'un panneau lumineux dans un quatrième mode de réalisation non couvert par les revendications ;
■ Les figures 5a et 5b représentent respectivement des vues schématiques de face et en coupe longitudinale d'un panneau lumineux dans un cinquième mode de réalisation non couvert par les revendications.

On précise que par un souci de clarté les différents éléments des objets (y compris les angles) représentés ne sont pas nécessairement reproduits à l'échelle.

Les figures 1a et 1b représentent respectivement des vues schématiques de face et en coupe latérale d'un panneau lumineux 100 dans un premier mode de réalisation de l'invention.

Ce panneau lumineux 100 comprend d'abord un substrat transparent plan, de préférence une feuille 1 en verre de préférence épaisse, par exemple de 4 ou 6 mm, et avec un coefficient d'absorption inférieur ou égal à 2,5 m⁻¹ dans le visible. On choisit de préférence un verre sodocalcique extraclair, de coefficient d'absorption inférieur à 0,7 m⁻¹ dans le visible ou le proche UV. Ce verre 1 est doté de première et deuxième faces principales parallèles 11, 12 et d'une tranche 13.

Un dispositif électroluminescent 2 de type OLED comportant une couche électroluminescente intercalée entre deux électrodes est agencé sur la deuxième face principale 12.

A titre d'exemple, un dispositif électroluminescent organique par exemple de type OLED comprend dans cet ordre, sur la face 12 :
- éventuellement une couche barrière aux alcalins, par exemple un nitrure ou oxynitrure de silicium, un nitrure ou oxynitrure d'aluminium, un oxyde ou oxycarbure de silicium ou encore une alternance de couches à haut indice de réfraction, compris entre 1,9 et 2,3, et de couches à bas indice de réfraction, compris entre 1,4 et 1,7, notamment selon les séquences Si₃N₄/SiO₂ ou Si₃N₄/SiO₂/Si₃N₄ ;
- une première électrode (monocouche ou multicouche), dite électrode inférieure ou arrière (bottom electrode en anglais) ;
- un système électroluminescent organique, (OLED) typiquement formé :
   - d'une couche en alpha-NPD,
   - d'une couche en TCTA + Ir(ppy)₃,
   - d'une couche en BPhen,
   - d'une couche en LiF,
   - une deuxième électrode (monocouche ou multicouche), dite électrode supérieure ou avant (top electrode en anglais).

Le dispositif 2 est une source de lumière surfacique et directe, de préférence blanche, de part et d'autre du verre 1. On définit ainsi des premières zones de lumière directe 31, 32 de part et d'autre du verre 1.

La première zone de lumière directe 31, du côté opposé au dispositif 2, couvre la partie centrale de la première face principale 11, sur une surface de 80 % de la surface du verre, autrement dit de la surface de la face 11.

La deuxième zone de lumière directe 32, du côté du dispositif 2, s'étend sur toute la deuxième face principale 12.

On adapte les caractéristiques du dispositif 2 pour que la luminance L1 de la première zone de lumière directe 31 soit de préférence supérieure à la luminance L2 de la deuxième zone de lumière directe 32 (comme symbolisé par les flèches épaisse F1 et mince F2).

Pour avoir L1 supérieure à L2, le dispositif est donc à émission principale par l'électrode arrière. Par exemple on choisit L1 égale à environ 1000 cd/m² et L2 égale à environ 500 cd/m² pour un confort visuel.

On choisit par exemple comme électrode arrière, une électrode transparente, par exemple de l'ITO de transmission lumineuse d'environ 85 %, et comme électrode avant, une couche métallique semi réfléchissante, par exemple une couche d'argent d'épaisseur entre 10 et 20 nm.

Dans les zones de lumière directe 31, 32, lorsque le dispositif 2 est éteint, le panneau lumineux 100 est transparent avec une transmission lumineuse T_{L} de l'ordre de 65 % et une réflexion lumineuse R_{L} de l'ordre de 15 %.

On peut obtenir des performances similaires en choisissant comme électrode arrière, une couche mince métallique, par exemple une couche d'argent d'épaisseur inférieure à 10 nm.

On peut augmenter la transmission lumineuse T_{L} et réduire la réflexion lumineuse R_{L} du panneau par exemple en ajoutant sur l'électrode avant une couche diélectrique (monocouche ou multicouche) par exemple du ZnO ou du Si₃N₄, par exemple d'épaisseur totale entre 20 et 40 nm, sans modifier significativement L1 et L2. On peut à l'inverse augmenter L2 et réduire L1 en jouant sur les épaisseurs et/ou les indices de la couche diélectrique.

Le dispositif 2 est aussi une source de rayonnement guidé dans l'épaisseur du verre 1, par réflexions totales.

Le rayonnement guidé est extrait des bords de la première face 11 au moyen d'une couche diffusante 41 par exemple à base de particules diffusantes minérales dispersés dans un liant minéral. On définit ainsi une zone de lumière 33 formant un cadre lumineux périphérique comme montré en figure 1a, par exemple de largeur égal à 5 % de la largeur du verre 1. En variante, la couche diffusante 41 forme uniquement des bandes latérales ou des bandes longitudinales périphériques.

Pour favoriser l'extraction du rayonnement guidé, chacun des bords formant la tranche 13 forme avec la deuxième face principale 12 associée à la source de lumière 2 un angle externe α supérieur à 80° et comporte un miroir 14, par exemple une couche métallique argent ou cuivre.

Entre 15 et 30 % environ de lumière émise par le dispositif 2 du côté de la première face 11 sort directement de cette première face 11 (lumière directe) et entre 70 % et 85 % environ de lumière émise du côté de la première face 11 par le dispositif 2 est guidée.

La luminance L3 est par exemple de l'ordre de 3000 cd/m². Le cadre 33 est plus lumineux que la zone centrale 31 (comme symbolisé par la flèche la plus épaisse F3).

Le panneau 100 peut être destiné au bâtiment, être une fenêtre éclairante, une porte éclairante, une paroi de serre ou une verrière ou encore être une vitre latérale de véhicule ou un toit lumineux. La première face 11 est la face intérieure (face la plus éclairante).

Lorsque le dispositif 2 est allumé, la zone centrale 31 peut être apte à préserver l'intimité d'une personne à l'intérieur d'une pièce, d'un habitacle la nuit ou dans un environnement sombre. Il suffit pour cela que le flux lumineux envoyé par le vitrage soit au moins égal à celui réfléchi et renvoyé par la pièce.

Le panneau 100 peut former un double vitrage, le dispositif 2 étant de préférence situé dans l'espace rempli de gaz interne entre le verre 1 et un verre additionnel éventuellement plus mince.

L'électrode avant et/ou arrière peut avoir une fonction de basse émissivité ou de contrôle solaire

Le panneau 100 ainsi conçu peut aussi servir d'étagère transparente et éclairante, de tablette lumineuse de réfrigérateur, de cloison transparente et éclairante entre deux pièces, de paroi d'un aquarium. On peut alors adapter les caractéristiques du dispositif 2 pour que la luminance L1 de la première zone de lumière directe 31 soit sensiblement égale à la luminance L2 de la deuxième zone de lumière directe 32.

Pour ce faire, on choisit des électrodes avant et arrière avec des caractéristiques optiques similaires ou identiques par exemple des couches en ITO.

Ainsi, dans les zones de lumière directe 31, 32, lorsque le dispositif 2 est éteint, le panneau lumineux est transparent avec une transmission lumineuse T_{L} de l'ordre de 80 % et une réflexion lumineuse R_{L} de l'ordre de 15 %.

On peut aussi choisir des électrodes avant et arrière en couche mince d'argent d'épaisseur entre 10 nm et 20 nm.

Ainsi, dans les zones de lumière directe 31, 32, lorsque le dispositif 2 est éteint, le panneau lumineux présente une transmission lumineuse T_{L} de l'ordre de 50 % et de réflexion lumineuse R_{L} de l'ordre de 50 %.

Les zones de lumière 31, 32 sont uniformes. Le panneau 100 peut aussi avoir, en variante, au moins une zone de lumière directe discontinue et/ou formant un dessin, un logo, une signalisation.

Le panneau lumineux 100 peut aussi en variante avoir sur chaque face 11, 12 une pluralité de zones de lumière directe, de préférence occupant au moins 50 %, voire 80 % de la surface du verre, éventuellement de géométrie donnée (rectangulaire, carré, rond ...) et/ou régulièrement réparties pour fournir un éclairage décoratif.

Le panneau lumineux 100 peut aussi en variante avoir une seule face éclairante 11, par exemple être un luminaire, notamment une dalle éclairante ou un plafonnier, de luminance L2 négligeable. Le panneau lumineux 100 peut servir à l'éclairage d'une paroi de salle de bains ou d'un plan de travail de cuisine. On choisit par exemple comme électrode supérieure une couche miroir, par exemple en aluminium ou en argent d'épaisseur de l'ordre de 100 nm. On peut aussi disposer un miroir en regard de la deuxième face 12. Le panneau lumineux 100 peut ainsi servir de miroir le jour et de source d'éclairement la nuit.

La figure 2 représente une vue schématique en coupe longitudinale d'un panneau lumineux 200 dans un deuxième mode de réalisation de l'invention.

Ce panneau 200 diffère du panneau 100 par les caractéristiques techniques suivantes :
- la couche diffusante est remplacée par une texturation du verre 42, sous forme de motifs géométriques réguliers, par exemple de sillons de taille micrométrique, ou en variante par ajout d'un cadre en plastique diffusant,
- le verre 1 est feuilleté avec un contre verre 1', éventuellement plus mince et/ou biseauté, au moyen d'un intercalaire de feuilletage 5 tel que du PVB, de préférence extraclair pour maintenir une transparence satisfaisante et une deuxième face 12 éclairante,
- le dispositif 2 s'étend sur une zone limitée et centrale occupant par exemple 60 à 70 % de la surface du verre 1,
- entre la zone de lumière directe 31 et la zone de lumière par extraction 33, il y a une zone transparente non lumineuse (zone sombre),
- la face externe du contre verre 1' comprend un miroir métallique 11' en regard de la zone d'extraction 42 à la fois pour masquer cette zone et pour récupérer la lumière rétrodiffusée susceptible d'être réfractée,
- de préférence toute la tranche du panneau (tranche du verre 1, tranche de la feuille, tranche du contre verre 1') comporte un miroir 14.

Le dispositif 2 est protégé par le feuilletage. On pourrait en variante former un double vitrage en remplaçant notamment le PVB par une lame d'air ou de préférence une lame de gaz inerte.

Le panneau 200 peut avoir les mêmes fonctions que le panneau lumineux 100 ou l'une des ses variantes précédemment décrites notamment :
- être destiné au bâtiment, être une fenêtre éclairante, une porte éclairante, une baie vitrée, une verrière, une paroi de serre ou encore être une vitre latérale de véhicule ou un toit lumineux, notamment avec une luminance L1 supérieure à L2 et inférieure à L3,
- être une cloison transparente et éclairante entre deux pièces ou encore être une étagère, une tablette de réfrigérateur, une paroi d'un aquarium, notamment avec une luminance L1 sensiblement égale à L2 et inférieure à L3,
- avoir au moins une zone de lumière directe formant un dessin, un logo, une signalisation, notamment avec une luminance L1 inférieure à L3,
- avoir sur chaque face 11, 12 une pluralité de zones de lumière directe,

La figure 3 représente une vue schématique en coupe longitudinale d'un panneau lumineux 300 dans un troisième mode de réalisation non couvert par les revendications.

Ce panneau lumineux 300 diffère du panneau 100 par les caractéristiques techniques suivantes :
- la couche diffusante est remplacée par une zone rugueuse du verre 43, le rendant diffusant, par exemple par sablage, attaque chimique ou, en variante, par ajout d'un cadre en plastique diffusant,
- le verre 1 est feuilleté avec un élément plan éventuellement opaque 6 ou réfléchissant au moins en surface, éventuellement plus mince et/ou biseauté, au moyen d'un intercalaire de feuilletage 5 tel que du PVB, de préférence mince et/ou extraclair,
- le dispositif 2 s'étend sur une zone limitée et centrale occupant 60 à 70 % de la surface du verre 1, est assemblé sur l'élément plan 6, le dispositif 2 est à émission principale par l'électrode avant (la plus proche du verre 1) choisie transparente, par exemple de l'ITO,
- le panneau 300 présente une seule face éclairante 11,
- éventuellement les bords 13' du verre 1 sont droits.

L'élément 6 peut être une feuille métallique, en argent ou en aluminium, servant d'électrode arrière.

Le panneau lumineux 300 peut avoir certaines des fonctions déjà décrites notamment :
- être un luminaire, notamment une dalle éclairante ou un plafonnier, avec une luminance L3 restant supérieure la luminance L1,
- avoir au moins une zone de lumière directe formant un dessin, un logo, une signalisation,
- avoir sur la face 11 une pluralité de zones de lumière directe.

Les figures 4a et 4b représentent respectivement des vues schématiques de face et en coupe longitudinale d'un panneau lumineux 400 dans un quatrième mode de réalisation non couvert par les revendications.

Ce panneau 400 diffère du panneau 100 par les caractéristiques techniques suivantes :
- le dispositif électroluminescent 2 est remplacé par des diodes électroluminescentes (LED) 2', ces diodes émettant par exemple dans le bleu, ayant par exemple un diagramme d'émission de type « bat wing » et formant un élément lumineux signalétique 31', par exemple une flèche,
- la couche diffusante est remplacée par une couche 44 à base de particules luminescentes à la fois diffusantes et émettant dans le jaune pour produire une lumière blanche à partir de la lumière bleue, par exemple du Y₃Al₅O₁₂:Ce, cette couche 44 formant deux bandeaux périphériques latéraux,
- le panneau présente une seule face éclairante 11, qui présente dans une zone centrale, une couche 7 à base de particules luminophores transparentes émettant dans le jaune pour produire une lumière blanche à partir de la lumière bleue, par exemple des particules dites « core-shell », par exemple à base de ZnS pour la coquille et de CdSe pour le coeur,
- la face 12 comprend deux couches miroir 12' en regard des bandes diffusantes 44.

Dans la zone de lumière directe 31, lorsque les diodes 2' sont éteintes, le panneau lumineux est globalement transparent de transmission lumineuse globale T_{L} de l'ordre de 85% et de réflexion lumineuse R_{L} de l'ordre de 15%.

Les diodes 2' peuvent aussi avoir une fonction décorative. Ces diodes peuvent être régulièrement réparties dans la zone centrale.

Dans une variante, les diodes 2' émettant une lumière blanche, la couche 7 peut être supprimée et la couche 44 peut être simplement à base de particules diffusantes, par exemple d'alumine.

Dans une autre variante, les diodes 2' émettant dans le proche UV, on choisit alors une couche de luminophore transparent et excitable dans le proche uv et une couche diffusante avec des luminophores excitables dans le proche uv.

Dans une autre variante, la couche 7 est supprimée et le dispositif électroluminescent 2 est conservé et forme l'élément lumineux signalétique 31'.

Les diodes électroluminescentes 2' peuvent aussi être remplacées par un TDEL formant la flèche 31' ou tout autre élément signalétique. La couche 7 est alors supprimée.

Les figures 5a et 5b représentent respectivement des vues schématiques de face et en coupe longitudinale d'un panneau lumineux 500 dans un cinquième mode de réalisation non couvert par les revendications.

Ce panneau lumineux 500 diffère du panneau 100 par les caractéristiques techniques décrites ci-après.

Le dispositif électroluminescent 2 est remplacé par une couche photoluminescente 2" transparente, centrée, et s'étendant sur 80 % de la face 11. Cette couche 2" est à base de nanoparticules luminophores excitables dans l'UV et émettant un ou des rayonnements dans le visible, par exemple des particules dites « core-shell », par exemple à base de ZnS pour la coquille et de CdSe pour le coeur.

L2 est identique à L1. Et, dans les zones de lumière directe 31, 32, lorsque la couche 2" n'est pas excitée, le panneau lumineux est transparent de transmission lumineuse T_{L} de l'ordre de 85 % et de réflexion lumineuse R_{L} de l'ordre de 15 %.

Le panneau 500 comprend une source de rayonnement guidé choisie UV, de préférence dans le proche UV, disposée sur un bord droit et sans miroir de la tranche 13. Il s'agit par exemple d'une série de diodes 20, sous forme de puces semiconductrices collées sur la tranche. En variante on choisit un tube néon.

Le rayonnement UV se propage par réflexions totales dans l'épaisseur du verre 1 et est extrait par une bande diffusante latérale 44' à base de particules luminescentes convertissant l'UV en lumière visible et de particules diffusantes et, par exemple un mélange de CaS:Eu, Tm²⁺ émettant dans le rouge, de SrAl₂O₄: Eu²⁺ émettant dans le vert et de particules « core-shell émettant dans le bleu. Cette extraction est réalisée sur la même face 11.

Le rayonnement émis par la couche 2" en direction du substrat est en partie guidé et extrait dans la zone 44'.

L3 peut être de l'ordre de 1000 cd/m².

Naturellement, pour chacun des modes de réalisation on peut substituer ou ajouter certaines caractéristiques d'un ou des autres modes de réalisation notamment le type d'extraction, le caractère monolithique ou multiple du panneau, la disposition et l'étendue de la source de lumière, le choix d'une ou de deux faces lumineuses.

## Revendications

1. Panneau lumineux (100, 200) comportant :
- un substrat plan transparent (1) ayant une tranche (13, 13'), deux faces principales (11, 12) et une épaisseur donnée,
- au moins une zone de lumière directe (31, 32) au moyen d'une source de lumière (2) associée à l'une des faces principales (11, 12), la source de lumière est directe et surfacique et est constituée d'un dispositif à couche électroluminescente organique,
- une source de rayonnement (2) visible, ledit rayonnement étant guidé par réflexions totales dans l'épaisseur du substrat,
au moins une zone d'extraction (41 à 42) du rayonnement guidé, ladite zone d'extraction étant associée à l'une des faces principales (11) pour former une autre zone lumineuse (33) distincte de la zone de lumière directe
**caractérisé en ce que** la source de lumière est unique et forme aussi la source dudit rayonnement guidé visible, et du côté de la face principale (11) associée à la zone d'extraction (41 à 42), la zone de lumière directe (31) présente une luminance inférieure à la luminance de l'autre zone lumineuse (33) pour un éclairage différencié,
le panneau comprend une seule source électrique de rayonnement visible qui est ladite source de lumière unique,
la zone de lumière directe (31, 32) occupe une surface égale à au moins 50 % de la face principale du substrat (1) et dans la zone de lumière directe (31), lorsque la source de lumière (2) est éteinte, le panneau lumineux est transparent ou globalement transparent.

2. Panneau lumineux (100 à 200) selon la revendication 1 **caractérisé en ce que** la zone de lumière directe (31, 32) occupe une surface égale à au moins 80 % de la face principale du substrat (1), notamment centrale.

3. Panneau lumineux (100, 200) selon l'une des revendications 1 à 2 **caractérisé en ce que** dans la zone de lumière directe (31, 31'), lorsque la source de lumière (2) est éteinte, le panneau lumineux est transparent ou globalement transparent, de transmission lumineuse T_{L} éventuellement globale supérieure à 20 % et de réflexion lumineuse R_{L} inférieure ou égale à 50 %.

4. Panneau lumineux (100, 200) selon l'une des revendications 1 à 3 **caractérisé en ce que** dans la zone de lumière directe (31, 31'), lorsque la source de lumière (2) est éteinte, le panneau lumineux est transparent ou globalement transparent, de transmission lumineuse T_{L} éventuellement globale supérieure ou égale à 20 % et de réflexion lumineuse R_{L} inférieure ou égale à 30 %.

5. Panneau lumineux (100 à 200) selon l'une des revendications précédentes **caractérisé en ce que** dans la zone de lumière directe (31, 31'), lorsque la source de lumière (2) est éteinte, le panneau lumineux est transparent ou globalement transparent, de transmission lumineuse T_{L} éventuellement globale supérieure ou égale à 50 % et de réflexion lumineuse R_{L} inférieure ou égale à 50 %.

6. Panneau lumineux (100 à 200) selon l'une des revendications précédentes **caractérisé en ce que** les deux faces principales ont chacune une zone de lumière directe, leurs luminances, qui sont L1 du coté opposé à la source de la lumière et L2 du côté de la source de lumière, sont distinctes, de préférence L1 est au moins deux fois supérieure à L2, notamment L1 est inférieure ou égale à 1200 cd/m² et L2 est inférieure ou égale à 500 cd/m².

7. Panneau lumineux (100 à 200) selon l'une des revendications précédentes **caractérisé en ce que** la luminance L3 de la zone d'extraction est supérieure ou égale à 1500 cd/m².

8. Panneau lumineux (100, 200) selon l'une des revendications précédentes **caractérisé en ce que** la source de lumière (2) est directement sur l'une des faces principales et de préférence la zone d'extraction (41, 42) est associée à la face principale opposée à la face principale avec la source de lumière.

9. Panneau lumineux (200) selon l'une des revendications précédentes **caractérisé en ce que** la source de lumière (2) est collée ou de préférence feuilletée avec un autre substrat plan (1') notamment transparent, à l'aide d'un intercalaire de feuilletage (5), notamment extraclair ou **en ce que** le substrat forme une feuille de verre d'un double vitrage et la source de lumière est de préférence disposée à l'intérieur du double vitrage.

10. Panneau lumineux (100 à 200) selon l'une des revendications précédentes **caractérisé en ce que** l'extraction est obtenue par l'un au moins des moyens suivants disposés dans ladite zone extraction : une couche diffusante (41), de préférence minérale, le substrat rendu diffusant, notamment texturé (42) ou rugueux, un élément diffusant, notamment texturé ou rugueux, rapporté sur le substrat transparent.

11. Panneau lumineux (100 à 200) des revendications précédentes **caractérisé en ce que** le substrat transparent est verrier (1) de préférence avec au moins une zone microtexturée, sablée ou dépolie à l'acide pour former la zone d'extraction (42).

12. Panneau lumineux (100, 200) selon l'une des revendications précédentes **caractérisé en ce qu'**au moins l'un des bords de la tranche (13) forme avec la face principale associée à la source de lumière un angle externe (α) supérieur ou égal à 45° et inférieur à 90°, de préférence supérieur ou égal à 80°.

13. Panneau lumineux (100, 200) selon l'une des revendications précédentes **caractérisé en ce qu'**au moins l'un des bords de la tranche (13) est réfléchissant, et comporte de préférence un miroir (14).

14. Panneau lumineux selon l'une des revendications précédentes **caractérisé en ce que** le substrat transparent est un verre présentant un coefficient d'absorption inférieur à 2,5 m⁻¹, de préférence inférieur à 0,7 m⁻¹ à la longueur d'onde du rayonnement guidé.

15. Panneau lumineux (100 à 200) selon l'une des revendications précédentes **caractérisé en ce que** l'épaisseur dudit substrat transparent (1) est d'au moins 1 mm, de préférence d'au moins 5 mm.

16. Panneau lumineux (100 à 200) selon l'une des revendications précédentes **caractérisé en ce qu'**il forme un panneau éclairant et/ou un panneau décoratif et/ou un panneau architectural et/ou un panneau de signalisation ou d'affichage.

17. Panneau lumineux (100 à 200) selon l'une des revendications précédentes **caractérisé en ce qu'**il forme un vitrage destiné au bâtiment, comme une façade, une fenêtre éclairante, un vitrage destiné à un véhicule de transport, comme une lunette arrière, une vitre latérale ou un toit d'automobile, ou à tout autre véhicule terrestre, aquatique ou aérien, un panneau pour l'éclairage routier ou urbain, un vitrage destiné au mobilier urbain ou domestique, une dalle éclairante, un plafonnier, un panneau d'abribus, une paroi d'un présentoir, d'un étalage de bijouterie ou d'une vitrine, un élément d'étagère ou de meuble, une façade d'un meuble, une tablette éclairante de réfrigérateur, une paroi d'aquarium, d'une serre.

## Claims

1. Luminous panel (100, 200) comprising:
- a transparent flat substrate (1) having an edge face (13, 13'), two main faces (11, 12) and a given thickness;
- at least one direct light region (31, 32) by means of a light source (2) associated with one of the main faces (11, 12), the light source being direct and planar and being constituted of a device with an organic electroluminescent layer;
- a visible radiation source (2), said radiation being guided by total reflections in the thickness of the substrate; and
- at least one extraction zone (41, 42) for extracting the guided radiation, said extraction zone being associated with one of the main faces (11) in order to form another luminous region (33) separate from the direct light region;
**characterized in that** the light source is a single source and also forms the source of said guided visible radiation and, on the side of the main face (11) associated with the extraction zone (41, 42), the direct light region (31) has a lower luminance then the luminance of the other luminous region (33) for differentiated illumination,
the panel comprises just one electrical source of visible radiation which is said single light source, the direct light region (31, 32) occupies an area equal to at least 50% of the main face of the substrate (1), and, in the direct light region (31), when the light source (2) is turned off, the luminous panel is transparent or generally transparent.

2. Luminous panel (100, 200) according to Claim 1, **characterized in that** the direct light region (31, 32) occupies an area equal to at least 80% of the main face of the substrate (1), especially the central area.

3. Luminous panel (100, 200) according to either of Claims 1 and 2, **characterized in that**, in the direct light region (31, 31'), when the light source (2) is turned off, the luminous panel is transparent or generally transparent, with a possibly overall light transmission T_{L} of greater than 20% and a light reflection R_{L} of less than or equal to 50%.

4. Luminous panel (100, 200) according to one of Claims 1 to 3, **characterized in that**, in the direct light region (31, 31'), when the light source (2) is turned off, the luminous panel is transparent or generally transparent, with a possibly overall light transmission T_{L} of greater than or equal to 20% and a light reflection R_{L} of less than or equal to 30%.

5. Luminous panel (100, 200) according to one of the preceding claims, **characterized in that**, in the direct light region (31, 31'), when the light source (2) is turned off, the luminous panel is transparent or generally transparent, with a possibly overall light transmission T_{L} of greater than or equal to 50% and a light reflection R_{L} of less than or equal to 50%.

6. Luminous panel (100, 200) according to one of the preceding claims, **characterized in that** the two main faces each have a direct light region, their luminances, which are L1 on the opposite side from the light source and L2 on the same side as the light source, are different, L1 is preferably at least twice as high as L2, L1 is especially less than or equal to 1200 cd/m² and L2 is less than or equal to 500 cd/m².

7. Luminous panel (100, 200) according to one of the preceding claims, **characterized in that** the luminance L3 of the extraction zone is greater than or equal to 1500 cd/m²_{.}

8. Luminous panel (100, 200) according to one of the preceding claims, **characterized in that** the light source (2) is placed directly on one of the main faces, and preferably the extraction zone (41, 42) is associated with the opposite main face from the main face with the light source.

9. Luminous panel (200) according to one of the preceding claims, **characterized in that** the light source (2) is bonded, or preferably laminated, to another, especially transparent, flat substrate (1') using a lamination interlayer (5), especially one that is extra-clear, or **in that** the substrate forms a glass sheet of a double glazing unit and the light source is preferably placed inside the double glazing unit.

10. Luminous panel (100, 200) according to one of the preceding claims, **characterized in that** the extraction takes place by at least one of the following means, placed in said extraction zone: a diffusing layer (41), preferably a mineral layer; the substrate rendered diffusing, especially textured (42) or rough; a diffusing element, especially a textured or rough element, which is attached to the transparent substrate.

11. Luminous panel (100, 200) of the preceding claims, **characterized in that** the transparent substrate (1) is made of glass, preferably with at least one zone that is microtextured, sandblasted or acid-etched so as to form the extraction zone (42).

12. Luminous panel (100, 200) according to one of the preceding claims, **characterized in that** at least one of the edges of the edge face (13) makes, with the main face associated with the light source, an external angle (α) equal to or greater than 45°, preferably equal to or greater than 80°, but less than 90°.

13. Luminous panel (100, 200) according to one of the preceding claims, **characterized in that** at least one of the edges of the edge face (13) is reflective and preferably comprises a mirror (14).

14. Luminous panel according to one of the preceding claims, **characterized in that** the transparent substrate is a glass having an absorption coefficient of less than 2.5 m⁻¹, preferably less than 0.7 m⁻¹, at the wavelength of the guided radiation.

15. Luminous panel (100, 200) according to one of the preceding claims, **characterized in that** the thickness of said transparent substrate (1) is at least 1 mm, preferably at least 5 mm.

16. Luminous panel (100, 200) according to one of the preceding claims, **characterized in that** it forms an illuminating panel and/or a decorative panel and/or an architectural panel and/or an indicating or display panel.

17. Luminous panel (100, 200) according to one of the preceding claims, **characterized in that** it forms glazing intended for buildings, such as a curtain wall, an illuminating window, glazing intended for a transport vehicle, such as a rear window, a side window or a motor vehicle sunroof, or intended for any other land, sea or air vehicle, a panel for roadway or municipal lighting, glazing intended for municipal or domestic furniture, an illuminating tile, a ceiling, a bus shelter panel, a wall of a display cabinet, a jewelers' display case or a shop window, a shelf or furniture element, a front face for an item of furniture, an illuminating refrigerator shelf, an aquarium wall or a greenhouse wall.

## Patentansprüche

1. Leuchtpanel (100, 200), umfassend:
- ein transparentes flaches Substrat (1), das eine Kante (13, 13'), zwei Hauptseiten (11, 12) sowie eine gegebene Dicke aufweist,
- wenigstens einen Direktlichtbereich (31, 32) mittels einer Lichtquelle (2), die einer der Hauptseiten (11, 12) zugeordnet ist, die Lichtquelle ist direkt und flächig und ist von einer Vorrichtung mit organischer Leuchtschicht gebildet,
- eine Quelle sichtbarer Strahlung (22), wobei die Strahlung durch Totalreflexionen in der Dicke des Substrats geleitet wird,
- wenigstens einen Bereich zum Extrahieren (41 bis 42) der geleiteten Strahlung, wobei der Extraktionsbereich einer der Hauptseiten (11) zugeordnet ist, um einen von dem Direktlichtbereich gesonderten weiteren Lichtbereich (33) auszubilden,
**dadurch gekennzeichnet, dass** die Lichtquelle die einzige ist und auch die Quelle der geleiteten sichtbaren Strahlung bildet, und auf der Seite der Hauptseite (11), welche dem Extraktionsbereich (41 bis 42) zugeordnet ist, der Direktlichtbereich (31) eine geringere Leuchtdichte als der andere Lichtbereich (33) für eine differenzierte Beleuchtung aufweist,
das Panel eine einzige elektrische Quelle sichtbarer Strahlung umfasst, welche die genannte einzige Lichtquelle ist,
der Direktlichtbereich (31, 32) eine Fläche einnimmt, die gleich wenigstens 50 % der Hauptseite des Substrats (1) ist, und in dem Direktlichtbereich (31), wenn die Lichtquelle (2) ausgeschaltet ist, das Leuchtpanel transparent oder im Wesentlichen transparent ist.

2. Leuchtpanel (100 bis 200) nach Anspruch 1, **dadurch gekennzeichnet, dass** der Direktlichtbereich (31, 32) eine - insbesondere mittlere - Fläche einnimmt, die gleich wenigstens 80 % der Hauptseite des Substrats (1) ist.

3. Leuchtpanel (100, 200) nach einem der Ansprüche 1 bis 2, **dadurch gekennzeichnet, dass** in dem Direktlichtbereich (31,31'), wenn die Lichtquelle (2) ausgeschaltet ist, das Leuchtpanel transparent oder im Wesentlichen transparent ist, mit einer Lichttransmission T_{L}, eventuell gesamten, von über 20 % und mit einer Lichtreflexion R_{L} von unter oder gleich 50 %.

4. Leuchtpanel (100, 200) nach einem der Ansprüche 1 bis 3, **dadurch gekennzeichnet, dass** in dem Direktlichtbereich (31, 31'), wenn die Lichtquelle (2) ausgeschaltet ist, das Leuchtpanel transparent oder im Wesentlichen transparent ist, mit einer Lichttransmission T_{L}, eventuell gesamten, von über oder gleich 20 % und mit einer Lichtreflexion R_{L} von unter oder gleich 30 %.

5. Leuchtpanel (100 bis 200) nach einem der vorstehenden Ansprüche, **dadurch gekennzeichnet, dass** in dem Direktlichtbereich (31, 31'), wenn die Lichtquelle (2) ausgeschaltet ist, das Leuchtpanel transparent oder im Wesentlichen transparent ist, mit einer Lichttransmission T_{L}, eventuell gesamten, von über oder gleich 50 % und mit einer Lichtreflexion R_{L} von unter oder gleich 50 %.

6. Leuchtpanel (100 bis 200) nach einem der vorstehenden Ansprüche, **dadurch gekennzeichnet, dass** die beiden Hauptseiten jeweils einen Direktlichtbereich aufweisen, ihre Leuchtdichten, welche L1 auf der der Lichtquelle gegenüberliegenden Seite und L2 auf der Seite der Lichtquelle sind, unterschiedlich sind, vorzugsweise L1 wenigstens zweimal größer als L2 ist, insbesondere L1 kleiner als oder gleich 1200 cd/m² ist und L2 kleiner als oder gleich 500 cd/m² ist.

7. Leuchtpanel (100 bis 200) nach einem der vorstehenden Ansprüche, **dadurch gekennzeichnet, dass** die Leuchtdichte L3 des Extraktionsbereiches größer als oder gleich 1500 cd/m² ist.

8. Leuchtpanel (100, 200) nach einem der vorstehenden Ansprüche, **dadurch gekennzeichnet, dass** die Lichtquelle (2) sich direkt auf einer der Hauptseiten befindet und vorzugsweise der Extraktionsbereich (41, 42) der Hauptseite zugeordnet ist, welche der Hauptseite mit der Lichtquelle gegenüberliegt.

9. Leuchtpanel (200) nach einem der vorstehenden Ansprüche, **dadurch gekennzeichnet, dass** die Lichtquelle (2) mit einem weiteren, insbesondere transparenten flachen Substrat (1') verklebt oder vorzugsweise mittels einer Schichtungszwischenlage (5), insbesondere extraklaren, verbunden ist, oder dass das Substrat eine Glasscheibe einer Doppelverglasung bildet und die Lichtquelle vorzugsweise innerhalb der Doppelverglasung angeordnet ist.

10. Leuchtpanel (100 bis 200) nach einem der vorstehenden Ansprüche, **dadurch gekennzeichnet, dass** die Extraktion mit Hilfe wenigstens eines der folgenden, in dem Extraktionsbereich angeordneten Mittel erzielt wird: einer - vorzugsweise mineralischen - streuenden Schicht (41), des streuend gemachten, insbesondere strukturierten (42) oder rauhen Substrats, eines streuenden, insbesondere strukturierten oder rauhen, an das transparente Substrat angesetzten Elements.

11. Leuchtpanel (100 bis 200) der vorstehenden Ansprüche, **dadurch gekennzeichnet, dass** das transparente Substrat gläsern (1) ist, vorzugsweise mit wenigstens einem mikrostrukturierten, sandgestrahlten oder säuremattierten Bereich, um den Extraktionsbereich (42) zu bilden.

12. Leuchtpanel (100, 200) nach einem der vorstehenden Ansprüche, **dadurch gekennzeichnet, dass** wenigstens einer der Ränder der Kante (13) mit der der Lichtquelle zugeordneten Hauptseite einen Außenwinkel (α) größer als oder gleich 45° und kleiner als 90°, vorzugsweise größer als oder gleich 80° bildet.

13. Leuchtpanel (100, 200) nach einem der vorstehenden Ansprüche, **dadurch gekennzeichnet, dass** wenigstens einer der Ränder der Kante (13) reflektierend ist und vorzugsweise einen Spiegel (14) umfasst.

14. Leuchtpanel nach einem der vorstehenden Ansprüche, **dadurch gekennzeichnet, dass** das transparente Substrat ein Glas mit einem Absorptionskoeffizienten von unter 2,5 m⁻¹, vorzugsweise unter 0,7 m⁻¹ bei der Wellenlänge der geleiteten Strahlung ist.

15. Leuchtpanel (100 bis 200) nach einem der vorstehenden Ansprüche, **dadurch gekennzeichnet, dass** die Dicke des transparenten Substrats (1) wenigstens 1 mm, vorzugsweise wenigstens 5 mm beträgt.

16. Leuchtpanel (100 bis 200) nach einem der vorstehenden Ansprüche, **dadurch gekennzeichnet, dass** es ein Beleuchtungspanel und/oder ein Zierpanel und/oder ein architektonisches Panel und/oder ein Signalisierungs- oder Anzeigepanel bildet.

17. Leuchtpanel (100 bis 200) nach einem der vorstehenden Ansprüche, **dadurch gekennzeichnet, dass** es eine für Gebäude bestimmte Verglasung, wie eine Fassade, ein leuchtendes Fenster, eine Verglasung, die für ein Beförderungsfahrzeug bestimmt ist, wie ein Heckfenster, eine Seitenscheibe oder ein Autodach, oder die für jedwedes andere Land-, Wasser- oder Luftfahrzeug bestimmt ist, ein Panel für die Straßen- oder Stadtbeleuchtung, eine für Straßeneinrichtungen oder Haushaltsgegenstände bestimmte Verglasung, eine Leuchtplatte, eine Deckenleuchte, ein Panel einer überdachten Bushaltestelle, eine Wand eines Schaukastens, einer Schmuckauslage oder einer Vitrine, ein Regal-oder Möbelelement, eine Fassade eines Möbels, ein leuchtender Kühlschrankeinlegeboden, eine Wand eines Aquariums, eines Treibhauses bildet.
